# EUROPEAN PATENT SPECIFICATION

(11) **EP 2 987 934 B1**
(45) Date of publication and mention of the grant of the patent: **24.05.2017**
(21) Application number: 13895599.2
(22) Date of filing: 14.11.2013
(51) Int. Cl.: E05F 15/00, B61D 17/02, B61D 17/06, B61C 17/00, E06B 3/32

(54) **OPENING/CLOSING MECHANISM HAVING A SELF-LOCKING DEVICE**
ÖFFNUNGS-UND SCHLIESSMECHANISMUS MIT EINER SELBSTVERRIEGELNDEN VORRICHTUNG
MÉCANISME D'OUVERTURE/FERMETURE À DISPOSITIF AUTOBLOQUANT

(30) Priority: 18.10.2013 CN 201310493600
(43) Date of publication of application: 24.02.2016
(73) Proprietor: CRRC QINGDAO SIFANG ROLLING STOCK RESEARCH INSTITUTE CO., LTD., Shibei Qingdao, Shandong 266031 (CN)
(72) Inventor: LIU, Hui, Qingdao Shandong 266031 (CN); WANG, Kun, Qingdao Shandong 266031 (CN); CHEN, Kai, Qingdao Shandong 266031 (CN); ZHANG, He, Qingdao Shandong 266031 (CN); LIU, Quan, Qingdao Shandong 266031 (CN); HUANG, Hui, Qingdao Shandong 266031 (CN); LIU, Xudong, Qingdao Shandong 266031 (CN)
(74) Representative: Price, Nigel John King
(86) International application number: PCT/CN2013/087112
(87) International publication number: WO 2015/054943

(56) References cited:
- WO-A1-2007/073273
- WO-A1-2011/154527
- CN-A- 103 015 828
- CN-U- 203 097 558
- CN-U- 203 515 122
- CN-Y- 201 206 386
- DE-U1- 29 706 073
- JP-A- 2006 214 190
- JP-A- 2008 037 386
- US-A- 5 104 269
- US-A1- 2013 042 788

## Description

The present invention relates to the field of railway vehicle mechanical manufacturing technology, in particular to a front-end opening/closing mechanism of a CRH train.

In order to realize reconnection or return rescue, usually a front-end opening/closing mechanism is simultaneously installed at both ends of a CRH train. As an important part of a CRH train, the front-end opening/closing mechanism is at a closed state during normal running (i.e. at a non-reconnection state) of the CRH train, during this time, a front-end fairing cabin door is closed so as to prevent vanes, dust, ice and snow from entering and to protect the coupler and other facilities in the front-end fairing, ensuring a good aerodynamic profile of the CRH train. in case of return or rescue, the opening/closing mechanism can be either automatically opened or manually opened, thus opening the front-end fairing cabin door and revolving it into the front end, the full-automatic coupler is stretched out for normal coupling.

At present, a familiar front-end opening/closing mechanism usually consists of a pushing device and a locking device. In order to achieve opening and closing the opening/closing mechanism and realize a reliable locking, the opening/closing mechanism usually is provided with one or several independent locking devices. Consequently, the opening-closing process and the locking process of the opening/closing mechanism usually are achieved by different operations, which require two or more different air cylinders, resulting in comparatively complex mechanical structure and automatic control theory of the opening/closing mechanism, as well as correspondingly higher cost and lower reliability.

CN 103015828 A discloses an opening and closing mechanism based on the slider-crank principle.

In allusion to above-mentioned disadvantages (more complex structure and higher cost, etc.) of the existing opening/closing mechanism at the front-end of a CRH train, the present invention provides an opening/closing mechanism equipped with a self-lock device, which is simple and reliable in structure, convenient for examination and repair, and low in cost.

According to the present invention there is provided an opening/closing mechanism as defined in the independent claim 1. Optionally, the said locking device comprising a cylinder body, in which precompressed with a rolling wheel assembly and a spring.

Optionally, the one end of the said cylinder body precompressed with a rolling wheel assembly is in rolling connection with the fairing support arm by means of the rolling wheel assembly, the rolling wheel assembly can roll in the fairing support arm, while the other end of the cylinder body is connected with the powered push cylinder.

Optionally, the one end of the said cylinder body precompressed with a rolling wheel assembly is in rolling connection with the fairing support arm by means of the rolling wheel assembly, the rolling wheel assembly can roll in the fairing support arm, while the underneath of the wheel of the rolling wheel assembly is connected with the powered push cylinder.

Optionally, the lower end of the said cylinder body is provided with a connector for manual unlocking and manual locking, both of which are operated through the connector.

Optionally, only one rotating shaft is positioned, which is in the center of the baseplate.

Optionally, two rotating shafts are positioned, which are on both sides of the baseplate.

Optionally, the said closed-state limit stop and open-state limit stop are arranged on the baseplate.

The advantageous effects of the invention: the present invention is simple and reliable in structure, low in cost, high in stability, and convenient for examination and repair; a power source is used for realization of opening and closing of the opening/closing mechanism, mechanical self-lock is achieved by means of over "dead point" for locking the opening/closing mechanism so as to hold at an established state; the present invention achieves opening and closing by one action, and simultaneously realizes the locking function of the opening/closing mechanism without additional power sources, changing the fact that additional locking devices and power sources are required for realization of the locking function of the previous opening/closing mechanism, and simplifying the structure of the opening/closing mechanism on the basis of realization of the locking function of the opening/closing mechanism. In addition, the lower end of the cylinder body of the locking device in the present invention is provided with a connector for manual unlocking and manual locking, both of which are operated through the connector simply; the manual unlocking and locking of the opening/closing mechanism can be achieved by revolving the locking device by an Allen wrench.
Fig.1 is a structure diagram of the opening/closing mechanism in embodiment 1 of the present invention.
Fig.2 is a schematic diagram of the opening/closing mechanism at the open-state in embodiment 1 of the present invention.
Fig.3 is an A-A sectional drawing of Fig.2 in embodiment 1 of the present invention.
Fig.4 is a schematic diagram of the opening/closing mechanism at the closed-state in embodiment 1 of the present invention.

Further description of the invention by way of example is made in combination with the accompanying drawings.

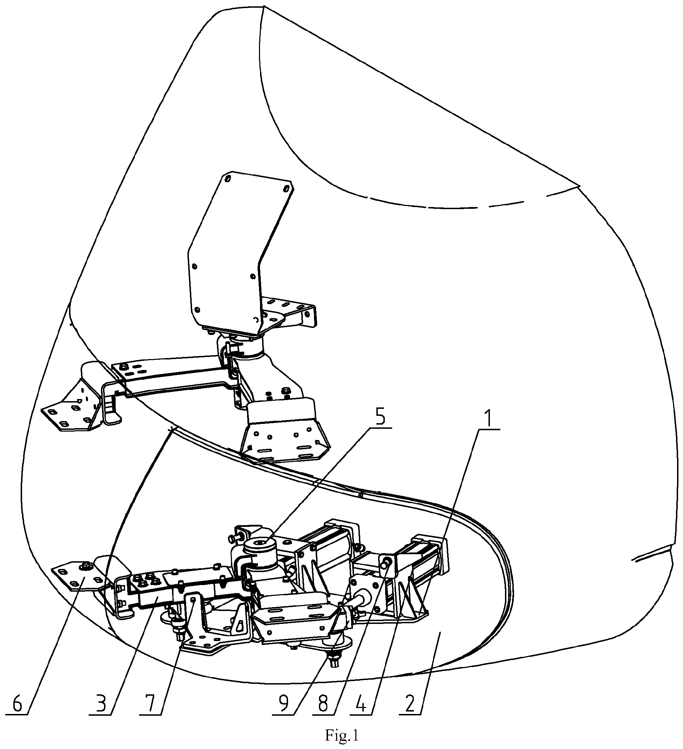

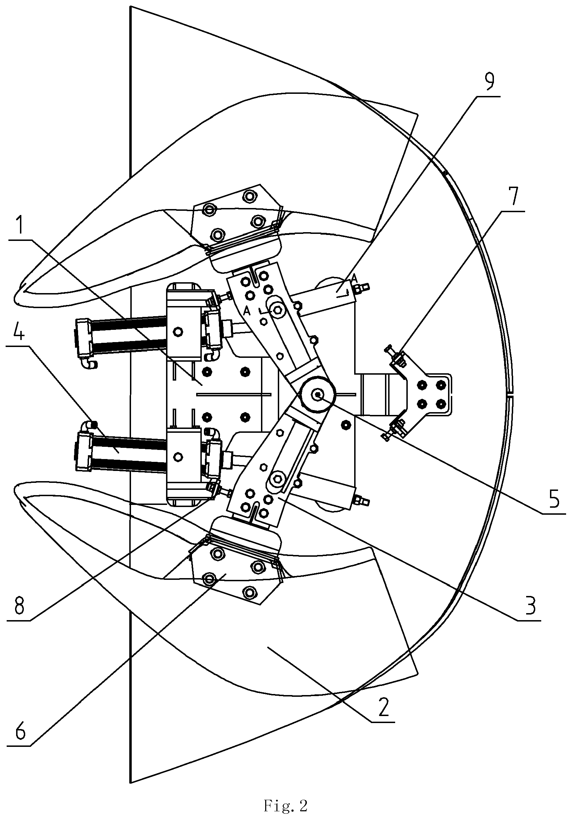

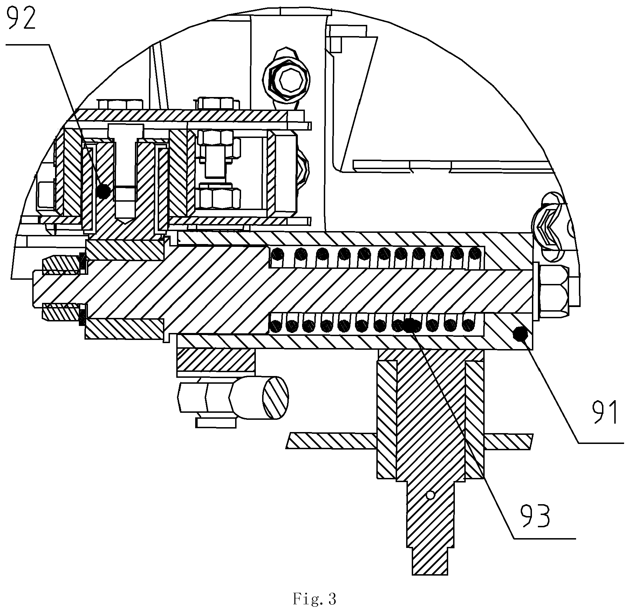

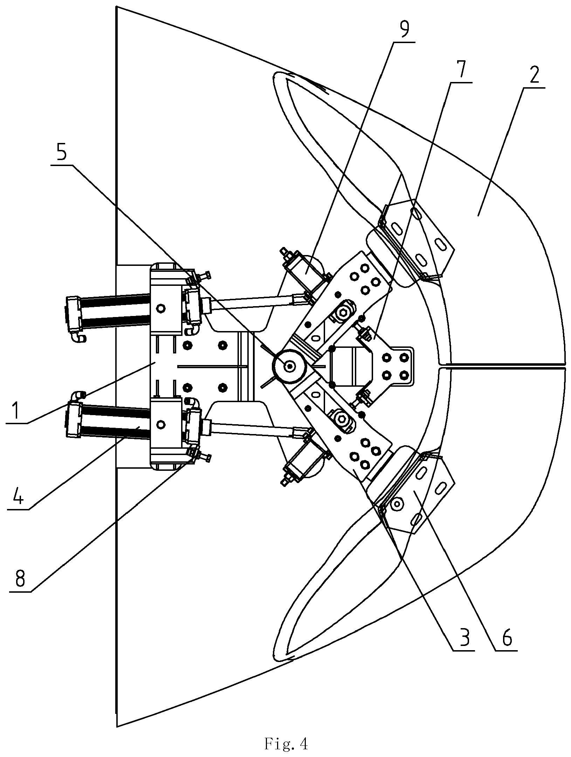

Embodiment 1: as shown in Figs.1-4, a opening/closing mechanism equipped with a self-lock device, wherein the opening/closing mechanism comprising a baseplate 1, a fairing 2, a fairing support arm 3, and a powered push cylinder 4; the baseplate 1 is provided with a rotating shaft 5, one end of the fairing support arm 3 is sleeved on the rotating shaft 5, while the other end is connected with the fairing 2 by means of a fairing mounting base 6; the fairing 2 is provided with a closed-state limit stop 7, an open-state limit stop 8 is arranged between the fairing support arm 3 and the fairing mounting base 6; a locking device 9 is arranged between the fairing support arm 3 and the powered push cylinder 4, one end of the said locking device 9 can move in the sliding groove of the fairing support arm 3, while the other end is installed on the powered push cylinder 4; in the opening or closing process of the opening/closing mechanism, the locking device 9 moves and forms a mechanism dead point with the fairing support arm 3; in the locking process, a part of the locking device 9 goes across the mechanism dead point and is mechanically limited, and in the unlocking process, the locking device 9 goes across the mechanism dead point from reversed direction.

For realization of the rolling connection between the locking device 9 and the fairing support arm 3 and giving play to self-locking function, the said locking device 9 comprising a cylinder body 91 in which precompressed with a rolling wheel assembly 92 and a spring 93; one end of the cylinder body 91 precompressed with the rolling wheel assembly 92 is in rolling connection with the fairing support arm 3 by means of the rolling wheel assembly 92, the rolling wheel assembly 92 can roll in the fairing support arm 3, while the other end of the cylinder body 91 is connected with the powered push cylinder 4.

The working principle of the locking device 9 for realization of self-lock is as below: driven by the powered push cylinder 4, the locking device 9 can rotate around the baseplate 1, the rolling wheel assembly 92 at the other end of the locking device 9 can roll in the fairing support arm 3, simultaneously driving the fairing support arm 3 to rotate around the rotating shaft 5; when the fairing 2 rotates to the open or closed-state, which is driven by the fairing support arm 3, the fairing support arm 3, under the action of the open-state limit stop 8 or the closed-state limit stop 7, is unable to continue rotating, at this moment, the locking device 9 continues rotating the rolling wheel assembly 92 to overcome spring force and thus being compressed. When the locking device 9 rotates to be perpendicular to (i.e. the critical point of mechanical "dead point") the fairing support arm 3, at this moment, the spring 93 of the locking device 9 is compressed the shortest, the locking device 9 continues rotating, the rolling wheel assembly 92 of the locking device 9 continues rolling in the fairing support arm 3, and the spring 93 is released, at this moment, the angle between the locking device 9 and the fairing support arm 3 is less than 90 degrees, thus generating a mechanical self-lock angle, giving play to self-locking action, locking the opening/closing mechanism and holding it at the established state.

For convenience of manual unlocking, the lower end of the cylinder body 91 of the locking device is provided with a connector for manual unlocking and manual locking, both of which are operated through the connector; the manual unlocking and locking of the opening/closing mechanism can be achieved by revolving the locking device by an Allen wrench; both the manual unlocking and the manual locking are simple for operation.

The specific working process of the opening/closing mechanism in the present invention is as below: if the fairing 2 is going to be open, the powered push cylinder 4 pushes the locking device 9 to rotate, at this moment, the rolling wheel assembly 92 rolls in the fairing support arm 3, simultaneously driving the fairing support arm 3 to rotate around the rotating shaft 5; when the fairing 2 rotates to the open-state, which is driven by the fairing support arm 3, the fairing support arm 3, under the action of the open-state limit stop 8, is unable to continue rotating, at this moment, the locking device 9 continues rotating the rolling wheel assembly 92 to overcome spring force and thus being compressed. When the locking device 9 rotates to be perpendicular to (i.e. the critical point of mechanical "dead point") the fairing support arm 3, at this moment, the spring 93 of the locking device 9 is compressed the shortest, the locking device 9 continues rotating, the rolling wheel assembly 92 of the locking device 9 continues rolling in the fairing support arm 3, and the spring 93 is released, at this moment, the angle between the locking device 9 and the fairing support arm 3 is less than 90 degrees, thus generating a mechanical self-lock angle, giving play to self-locking action, locking the opening/closing mechanism and holding it at the open position.

If the fairing 2 is going to be closed, the powered push cylinder 4 pulls back the locking device 9 to rotate, at this moment, the rolling wheel assembly 92 rolls in the fairing support arm 3, simultaneously driving the fairing support arm 3 to rotate around the rotating shaft 5; when the fairing 2 rotates to the closed-state, which is driven by the fairing support arm 3, the fairing support arm 3, under the action of the closed-state limit stop 7, is unable to continue rotating, at this moment, the locking device 9 continues rotating the rolling wheel assembly 92 to overcome spring force and thus being compressed. When the locking device 9 rotates to be perpendicular to (i.e. the critical point of mechanical "dead point") the fairing support arm 3, at this moment, the spring 93 of the locking device 9 is compressed the shortest, the locking device 9 continues rotating, the rolling wheel assembly 92 of the locking device 9 continues rolling in the fairing support arm 3, and the spring 93 is released, at this moment, the angle between the locking device 9 and the fairing support arm 3 is less than 90 degrees, thus generating a mechanical self-lock angle, giving play to self-locking action, locking the opening/closing mechanism and holding it at the closed position.

Embodiment 2: different from Embodiment 1, in Embodiment 2, for realization of the rolling connection between the locking device 9 and the fairing support arm 3 and giving play to self-locking function, the locking device 9 comprising a cylinder body 91 in which precompressed with a rolling wheel assembly 92 and a spring 93; one end of the cylinder body precompressed with the rolling wheel assembly is in rolling connection with the fairing support arm by means of the rolling wheel assembly, the rolling wheel assembly can roll in the fairing support arm, while the underneath of the wheel of the rolling wheel assembly is connected with the powered push cylinder.

Embodiment 3: different from Embodiment 1, in Embodiment 3, there are two rotating shafts 5 arranged on both sides of the baseplate 1; the two rotating shafts 5 are respectively sleeved at one end of the fairing support arm 3 on the same side, while the other end of the fairing support arm 3 is connected with the fairing 2 by means of the fairing mounting base 6.

Embodiment 4: different from Embodiment 3, in Embodiment 4, for realization of the rolling connection between the locking device 9 and the fairing support arm 3 and giving play to self-locking function, the locking device 9 comprising a cylinder body 91 in which precompressed with a rolling wheel assembly 92 and a spring 93; one end of the cylinder body precompressed with the rolling wheel assembly is in rolling connection with the fairing support arm by means of the rolling wheel assembly, the rolling wheel assembly can roll in the fairing support arm, while the wheel underneath of the rolling wheel assembly is connected with the powered push cylinder.

## Claims

1. An opening/closing mechanism equipped with a self-lock device, wherein the opening/closing mechanism comprising a baseplate (1), a fairing (2), a fairing support arm (3), a powered push cylinder (4),
- **characterized by**:
further comprising a fairing closed-state limit stop (7) and a fairing open-state limit stop (8) wherein: the baseplate (4) is provided with a rotating shaft (5), one end of the fairing support arm (3) is sleeved on the rotating shaft (5), while the other end is connected with the fairing (2) by means of a fairing mounting base (6); a locking device (9) is arranged between the fairing support arm (3) and the powered push cylinder (4), one end of the said locking device (9) can move in the sliding groove of the fairing support arm (3), while the other end is installed on the powered push cylinder (4); in the opening or closing process of the opening/closing mechanism, the locking device (9) moves and forms a mechanism dead point with the fairing support arm (3); in the locking process, a part of the locking device (9) goes across the mechanism dead point and is mechanically limited, and in the unlocking process, the locking device (9) goes across the mechanism dead point from reversed direction.

2. The opening/closing mechanism equipped with a self-lock device according to claim 1, wherein the said locking device (9) comprising a cylinder body (91), in which precompressed with a rolling wheel assembly (92) and a spring (93).

3. The opening/closing mechanism equipped with a self-lock device according to claim 2, wherein the one end of the said cylinder body (91) precompressed with a rolling wheel assembly (92) is in rolling connection with the fairing support arm (3) by means of the rolling wheel assembly (92), the rolling wheel assembly (92) can roll in the fairing support arm (3), while the other end of the cylinder body (91) is connected with the powered push cylinder (4).

4. The opening/closing mechanism equipped with a self-lock device according to claim 2, wherein the end of the said cylinder body (91) precompressed with a rolling wheel assembly (92) is in rolling connection with the fairing support arm (3) by means of the rolling wheel assembly (92), the rolling wheel assembly (92) can roll in the fairing support arm (3), while the underneath of the wheel of the rolling wheel assembly (92) is connected with the powered push cylinder (4).

5. The opening/closing mechanism equipped with a self-lock device according to claim 2, wherein the lower end of the said cylinder body (91) is provided with a connector for manual release and manual locking, both of which are operated through the connector.

6. The opening/closing mechanism equipped with a self-lock device according to claim 1, wherein only one rotating shaft (5) is positioned, which is in the center of the baseplate (1).

7. The opening/closing mechanism equipped with a self-lock device according to claim 1, wherein two rotating shafts (5) are positioned, which are on both sides of the baseplate (1).

8. The opening/closing mechanism equipped with a self-lock device according to claim 1, wherein the said closed-state limit stop (7) and open-state limit stop (8) are arranged on the baseplate (1).

## Patentansprüche

1. Öffnungs-/Schließmechanismus, ausgestattet mit einer Selbstverriegelungsvorrichtung, wobei der Öffnungs-/Schließmechanismus eine Grundplatte (1), eine Verkleidung (2), einen Verkleidungstragearm (3), einen angetriebenen Schubzylinder (4) umfasst,
**gekennzeichnet durch**:
das weitere Umfassen eines Anschlags der Verkleidung in geschlossenem Zustand (7) und
eines Anschlags der Verkleidung in offenem Zustand (8),
wobei
die Grundplatte (4) mit einer Drehwelle (5) bereitgestellt ist, wobei ein Ende des Verkleidungstragearms (3) auf die Drehwelle (5) gestülpt wird, während das andere Ende mittels einer Verkleidungs-Befestigungsbasis (6) mit der Verkleidung (2) verbunden ist; eine Sperrvorrichtung (9) zwischen dem Verkleidungstragearm (3) und dem angetriebenen Schubzylinder (4) angeordnet ist, wobei sich ein Ende der Sperrvorrichtung (9) in die Gleitnut des Verkleidungstragearms (3) bewegen kann, während das andere Ende auf dem angetriebenen Schubzylinder (4) installiert wird; sich beim Öffnungs- oder Schließverfahren des Öffnungs-/Schließmechanismus die Sperrvorrichtung (9) bewegt und einen toten Punkt des Mechanismus mit dem Verkleidungstragearm (3) bildet; beim Sperrverfahren ein Teil der Sperrvorrichtung (9) über den toten Punkt des Mechanismus hinausgeht und mechanisch eingeschränkt wird und wobei beim Verfahren des Entsperrens die Sperrvorrichtung (9) von einer umgekehrten Richtung über den toten Punkt des Mechanismus hinausgeht.

2. Öffnungs-/Schließmechanismus, ausgestattet mit einer Selbstverriegelungsvorrichtung, nach Anspruch 1, wobei die Sperrvorrichtung (9) einen Zylinderkörper (91) umfasst, der mit einer rollenden Radanordnung (92) und einer Feder (93) vorkomprimiert ist.

3. Öffnungs-/Schließmechanismus, ausgestattet mit einer Selbstverriegelungsvorrichtung, nach Anspruch 2, wobei das eine Ende des Zylinderkörpers (91), der mit einer rollenden Radanordnung (92) vorkomprimiert ist, mittels der rollenden Radanordnung (92) in rollender Verbindung mit dem Verkleidungstragearm (3) steht, wobei die rollende Radanordnung (92) im Verkleidungstragearm (3) rollen kann, während das andere Ende des Zylinderkörpers (91) mit dem angetriebenen Schubzylinder (4) verbunden wird.

4. Öffnungs-/Schließmechanismus, ausgestattet mit einer Selbstverriegelungsvorrichtung, nach Anspruch 2, wobei das Ende des Zylinderkörpers (91), der mit einer rollenden Radanordnung (92) vorkomprimiert ist, mittels der rollenden Radanordnung (92) in Rollverbindung mit dem Verkleidungstragearm (3) steht, wobei die rollende Radanordnung (92) im Verkleidungstragearm (3) rollen kann, während die Unterseite des Rads der rollenden Radanordnung (92) mit dem angetriebenen Schubzylinder (4) verbunden wird.

5. Öffnungs-/Schließmechanismus, ausgestattet mit einer Selbstverriegelungsvorrichtung, nach Anspruch 2, wobei das untere Ende des Zylinderkörpers (91) mit einer Verbindung für manuelles Lösen und manuelles Absperren bereitgestellt ist, von denen beides durch die Verbindung betrieben wird.

6. Öffnungs-/Schließmechanismus, ausgestattet mit einer Selbstverriegelungsvorrichtung, nach Anspruch 1, wobei nur eine Drehwelle (5) positioniert ist, die sich in der Mitte der Grundplatte (1) befindet.

7. Öffnungs-/Schließmechanismus, ausgestattet mit einer Selbstverriegelungsvorrichtung, nach Anspruch 1, wobei zwei Drehwellen (5) positioniert sind, die sich auf beiden Seiten der Grundplatte (1) befinden.

8. Öffnungs-/Schließmechanismus, ausgestattet mit einer Selbstverriegelungsvorrichtung, nach Anspruch 1, wobei der Anschlag der Verkleidung in geschlossenem Zustand (7) und der Anschlag der Verkleidung in offenem Zustand (8) auf der Grundplatte (1) angeordnet sind.

## Revendications

1. Mécanisme d'ouverture/fermeture à dispositif autobloquant, le mécanisme d'ouverture/fermeture comprenant un socle (1), un carénage (2), un bras de support de carénage (3), un cylindre de poussée alimenté (4), **caractérisé en ce que** :
il comprend en outre un limiteur de course en état fermé de carénage (7) et un limiteur de course en état ouvert de carénage (8), dans lequel : le socle (4) est équipé d'un arbre de rotation (5), une extrémité du bras de support de carénage (3) est chemisée sur l'arbre de rotation (5), tandis que l'autre extrémité est raccordée au carénage (2) au moyen d'une base de montage de carénage (6) ; un dispositif de verrouillage (9) est disposé entre le bras de support de carénage (3) et le cylindre de poussée alimenté (4), une extrémité dudit dispositif de verrouillage (9) peut se déplacer dans la rainure coulissante du bras de support de carénage (3), tandis que l'autre extrémité est installée sur le cylindre de poussée alimenté (4) ; lors du processus d'ouverture ou de fermeture du mécanisme d'ouverture/fermeture, le dispositif de verrouillage (9) se déplace et forme un point mort de mécanisme avec le bras de support de carénage (3) ; lors du processus de verrouillage, une partie du dispositif de verrouillage (9) traverse le point mort du mécanisme et est délimitée mécaniquement, et lors du processus de déverrouillage, le dispositif de verrouillage (9) traverse le point mort de mécanisme depuis une direction inverse.

2. Mécanisme d'ouverture/fermeture à dispositif autobloquant selon la revendication 1, dans lequel ledit dispositif de verrouillage (9) comprend un corps de cylindre (91), qui est pré-comprimé avec un ensemble de roues de roulement (92) et un ressort (93).

3. Mécanisme d'ouverture/fermeture à dispositif autobloquant selon la revendication 2, dans lequel la première extrémité dudit corps de cylindre (91) pré-comprimée avec un ensemble de roues de roulement (92) est en contact de roulement avec le bras de support de carénage (3) au moyen de l'ensemble de roues de roulement (92), l'ensemble de roues de roulement (92) peut rouler dans le bras de support de carénage (3), tandis que l'autre extrémité du corps de cylindre (91) est raccordée au cylindre de poussée alimenté (4).

4. Mécanisme d'ouverture/fermeture à dispositif autobloquant selon la revendication 2, dans lequel l'extrémité dudit corps de cylindre (91) pré-comprimée avec un ensemble de roues de roulement (92) est en contact de roulement avec le bras de support de carénage (3) au moyen de l'ensemble de roues de roulement (92), l'ensemble de roues de roulement (92) peut rouler dans le bras de support de carénage (3), tandis que le dessous de la roue de l'ensemble de roues de roulement (92) est raccordé au cylindre de poussée alimenté (4).

5. Mécanisme d'ouverture/fermeture à dispositif autobloquant selon la revendication 2, dans lequel l'extrémité inférieure dudit corps de cylindre (91) est équipée d'un raccord en vue d'un dégagement manuel et d'un verrouillage manuel, les deux étant actionnés par le raccord.

6. Mécanisme d'ouverture/fermeture à dispositif autobloquant selon la revendication 1, dans lequel seulement un arbre de rotation (5) est positionné, qui est situé dans le centre du socle (1).

7. Mécanisme d'ouverture/fermeture à dispositif autobloquant selon la revendication 1, dans lequel deux arbres de rotation (5) sont positionnés, qui sont situés sur les deux côtés du socle (1).

8. Mécanisme d'ouverture/fermeture à dispositif autobloquant selon la revendication 1, dans lequel lesdits limiteur de course en état fermé (7) et limiteur de course en état ouvert (8) sont disposés sur le socle (1).
